# EUROPÄISCHE PATENTSCHRIFT

(11) **EP 3 365 185 B1**
(45) Veröffentlichungstag und Bekanntmachung des Hinweises auf die Patenterteilung: **10.07.2019**
(21) Anmeldenummer: 17724719.4
(22) Anmeldetag: 05.05.2017
(51) Int. Cl.: B21K 1/28, B60B 21/10, B60B 21/12, B60Q 1/10, F21S 41/675, G01M 11/06, B60B 3/02

(54) **VERFAHREN ZUR HERSTELLUNG EINES RADS, GUSSFORM ZUR HERSTELLUNG EINES RADS UND RAD**
METHOD FOR PRODUCING A WHEEL, CAST FOR PRODUCING A WHEEL AND WHEEL
PROCÉDÉ DE FABRICATION D'UNE ROUE, MOULE DE FABRICATION ET ROUE

(30) Priorität: 06.05.2016 AT 5007516 U
(43) Veröffentlichungstag der Anmeldung: 29.08.2018
(73) Patentinhaber: Borbet Austria GmbH, 5282 Ranshofen (AT)
(72) Erfinder: EBETSHUBER, Manfred, 4942 Gurten (AT); HOFMANN, Josef, 5242 St. Johann am Walde (AT)
(74) Vertreter: Sonn & Partner Patentanwälte
(86) Internationale Anmeldenummer: PCT/AT2017/060117
(87) Internationale Veröffentlichungsnummer: WO 2017/190170

(56) Entgegenhaltungen:
- WO-A1-01/17799
- WO-A1-99/33674
- GB-A- 2 249 063
- US-A- 5 292 182

## Beschreibung

Die Erfindung betrifft ein Verfahren zur Herstellung eines Rads, insbesondere eines Fahrzeugrads, mit einem Felgenkörper, an den ein vorderer Hornbereich anschließt, der über ein Felgenbett mit einem gegenüberliegenden hinteren Hornbereich verbunden ist, der einen umlaufenden, gegenüber dem Felgenbett verdickten Bund aufweist, wobei mittels Gießen ein Vorformling gebildet wird, welcher zum fertigen Rad umgeformt wird.

Die Erfindung betrifft zudem eine Gussform zur Herstellung eines Rads, insbesondere eines Fahrzeugrads, mit einem solchen Verfahren.

Weiters betrifft die Erfindung ein Rad, insbesondere ein Fahrzeugrad, mit einem Felgenkörper, an den ein vorderer Hornbereich anschließt, der über ein Felgenbett mit einem gegenüberliegenden hinteren Hornbereich verbunden ist, der einen umlaufenden, gegenüber dem Felgenbett verdickten Bund aufweist.

Räder, insbesondere für Kraftfahrzeuge, sind häufig hohen mechanischen Belastungen ausgesetzt und müssen dennoch geeignete Stabilität und Zuverlässigkeit aufweisen. Besonders beim Durchfahren von Schlaglöchern oder sonstigen Bodenunebenheiten, muss das Rad hohe Anforderungen an die Aufnahmefähigkeit entsprechender dynamischer, vorrangig in radialer Richtung wirkender Schlagkräfte erfüllen. Hierfür sind die Räder bekannter Weise mit einem verstärkt ausgebildeten hinteren Hornbereich versehen, was jedoch den Nachteil einer entsprechenden Gewichtserhöhung der Räder mit sich bringt.

Aus dem Stand der Technik sind Maßnahmen bekannt, welche die Aufnahmefähigkeit von auf das Rad wirkenden Stoßbelastungen bei gleichzeitiger Gewichtsbegrenzung des Rads verbessern.

Die DE 20 2008 005 455 U1 offenbart ein aus einer Aluminiumlegierung hergestelltes Fahrzeugrad mit einer Felge, welche ein Innenhorn, ein Außenhorn und ein Felgenbett aufweist. Zur Reduktion des Gewichts und des Materialaufwands für die Felge sind am Innenhorn, am Außenhorn und am Felgenbett voneinander getrennt angeordnete, einseitig abgedeckte bzw. nicht als Durchgangsöffnungen ausgebildete Aussparungen vorgesehen. Die Aussparungen sind beispielsweise rechteckig oder kreisförmig geformt. Detaillierte Angaben, welche auf eine optimierte Gewichtseinsparung der Felge hinweisen, sind hierin nicht angegeben.

Die GB 2 249 063 A betrifft ein Gussrad mit einem hinteren Hornbereich, der eine Vielzahl einzelner, sich in Umfangsrichtung erstreckender Vertiefungen aufweist, und ein Verfahren zur Herstellung des Rads. Während durch die Vertiefungen die Gefahr von Lufteinschlüssen beim Gießen des Rads verringert wird, halten zwischen den Vertiefungen verbleibende Rippen die Stabilität des Rads aufrecht. Das Rad ist somit nicht mit dem Ziel einer möglichst hohen Gewichtseinsparung konstruiert.

Aus der WO 2011/146957 A1 geht ein Verfahren zur Herstellung eines Rads hervor, wobei zunächst mittels Gießen oder Schmieden ein Vorformling des Rads hergestellt wird, in dessen hinteren Hornbereich anschließend mittels Schmieden oder Fließdrücken speziell geformte einzelne Materialaussparungen eingebracht werden, welche die mechanischen Eigenschaften des Rads mit geringem Gewicht verbessern.

Zudem sind andersartige Räder und Verfahren zur Herstellung derselben beispielsweise aus der DE 1 908 465 bekannt.

Obgleich bekannte Räder Materialaussparungen zur Verbesserung ihrer mechanischen Eigenschaften und zur Reduktion ihres Gewichts aufweisen, sind weitere Verbesserungen der Radeigenschaften, insbesondere der Herstellungsverfahren, der dafür verwendeten Gussformen und der Räder erwünscht.

Es ist nun Aufgabe der Erfindung ein Verfahren, eine Gussform und ein Rad wie eingangs angegeben zu schaffen, welche die Nachteile des Standes der Technik vermeiden oder zumindest verringern. Das Verfahren soll unter Verwendung einer besonders geeigneten Gussform eine material- und zeitsparende Herstellung eines Rads ermöglichen, welches einer hohen mechanischen Belastung, insbesondere einer hohen Radialbelastung standhält und geringes Gewicht aufweist.

Diese Aufgabe wird durch ein Verfahren gemäß Anspruch 1, durch eine Gussform gemäß Anspruch 7 und durch ein Rad gemäß Anspruch 9 gelöst. Vorteilhafte Ausführungen und Weiterbildungen sind in den abhängigen Ansprüchen angegeben.

Erfindungsgemäß ist für das Verfahren zur Herstellung eines Rads, insbesondere eines Fahrzeugrads, vorgesehen, dass für die Herstellung des Rads mit einer umlaufenden, sich rillenförmig im Bund, entlang einer hinteren Stirnfläche des Bunds erstreckenden und eine definierten Rillentiefe aufweisenden Materialaussparung, die Materialaussparung beim Gießen des Vorformlings zunächst mit einer ersten Tiefe hergestellt wird, und anschließend bis zur Ausbildung einer zweiten Tiefe umgeformt wird, welche größer als die erste Tiefe ist, wobei die Tiefe jeweils von einer Referenzebene bestimmt wird, welche im Wesentlichen senkrecht zu einer Drehachse des Rads und durch einen hinteren Scheitelpunkt eines in Verlängerung des Felgenbetts angeordneten Abschnitts der hinteren Stirnfläche des gegossenen, nicht umgeformten Vorformlings verlaufend angeordnet ist. Das herzustellende Rad weist einen Felgenkörper auf, an den ein vorderer Hornbereich anschließt. Dieser ist über ein Felgenbett mit einem gegenüberliegenden hinteren Hornbereich verbunden. Im Weiteren Verlauf der Beschreibung ist der Begriff "vorne" als im zweckmäßig montierten Zustand des Rads vom Fahrzeug abgewandt zu verstehen. Dementsprechend ist der Begriff "hinten" als im zweckmäßig montierten Zustand des Rads dem Fahrzeug zugewandt zu verstehen. Das Felgenbett dient der Aufnahme eines am Rad montierten Reifens, welcher durch den vorderen Hornbereich und den hinteren Hornbereich in axialer Richtung der Rads festgehalten wird. Unter der axialen Richtung ist jene Richtung zu verstehen, die parallel zur vorgesehenen Drehachse des Rads verläuft. Das Rad wird zur Verwendung an einer Seite eines mehrspurigen Fahrzeugs montiert. Um dem Rad bzw. dem hinteren Hornbereich insbesondere in radialer Richtung, also senkrecht zur axialen Richtung, Stabilität zu verleihen, weist der hintere Hornbereich einen umlaufenden, gegenüber dem Felgenbett verdickten Bund auf. Der Bund erstreckt sich zumindest teilweise, vorzugsweise im Wesentlichen, in radialer Richtung des Rads. Um die Anforderungen an geringes Gewicht und hohe Stabilität des fertiggestellten Rads zu erfüllen, wird das Rad mittels des Verfahrens mit einer umlaufenden, sich rillenförmig im Bund, entlang einer hinteren Stirnfläche des Bunds erstreckenden und ein definierte Rillentiefe aufweisenden Materialaussparung hergestellt. Das fertiggestellte Rad weist somit eine einzige, in Umfangsrichtung entlang des Bunds verlaufende und vorzugsweise in sich geschlossene Materialaussparung bzw. Vertiefung auf. Die als Rille bzw. Nut ausgebildete Materialaussparung wird entlang und in einer hinteren Stirnfläche des Bunds gebildet, wobei die hintere Stirnfläche des Bunds mit der Drehachse des Rads einen von null verschiedenen Winkel einschließt und im am Fahrzeug montierten Zustand des Rads näher zum Fahrzeug angeordnet ist als eine zur hinteren Stirnfläche gegenüberliegende vordere Stirnfläche des Bunds. Im fertiggestellten Rad weist die Materialaussparung eine definierte, in Umfangsrichtung vorzugsweise einheitliche Rillentiefe auf.

Für die Fertigung des Rads wird zunächst ein Vorformling gegossen, indem beispielsweise flüssiges Aluminium in eine Gussform eingebracht wird. Anschließend wird der erstarrte Vorformling aus der Gussform entnommen und mit mechanischen Verfahren zum fertigen Rad umgeformt. Wesentlich ist hierbei, dass die Materialaussparung beim Gießen des Vorformlings zunächst mit einer ersten Tiefe hergestellt wird, welche ausgehend von einer Referenzebene in axialer Richtung zum vorderen Hornbereich hin gemessen wird, wobei die Referenzebene durch einen hinteren Scheitelpunkt eines insbesondere in direkter bzw. geradliniger Verlängerung des Felgenbetts angeordneten Abschnitts der hinteren Stirnfläche des gegossenen, nicht umgeformten Vorformlings verläuft. Anschließend wird die Materialaussparung im der Gussform entnommenen bzw. ausgehärteten Vorformling bis zur Ausbildung einer zweiten Tiefe, von der Referenzebene gemessen, umgeformt, wobei die zweite Tiefe größer als die erste Tiefe ist. Das Rad wird somit durch Gießen und einen darauf folgenden mechanischen Umformvorgang hergestellt.

Das Verfahren bietet die Vorteile, dass zum einen bereits beim Gießen des Vorformlings der Materialaufwand und somit der Kostenaufwand für das Rad reduziert wird. Zusätzlich bewirkt die Materialaussparung im hinteren Hornbereich, insbesondere im Bund, verglichen mit einem Bund ohne Materialaussparung, eine raschere Erstarrung des hinteren Hornbereichs, sodass dieser ähnlich rasch wie beispielsweise das Felgenbett erstarren kann. Hierdurch werden aus dem Stand der Technik bekannte Probleme, die durch ein im Vergleich zum Felgenbett deutlich langsameres Abkühlen des Bunds hervorgerufen werden, eine Ansammlung von Lufteinschlüssen im Bund, oder allgemein ein starkes Schrumpfen eines ohne Materialaussparung hergestellten Bunds, vermieden. Das raschere Abkühlen führt somit auch zu einem besser ausgebildeten Metallgefüge und zu höheren Festigkeitswerten des Rads. Die hohe mechanische Belastbarkeit des Rads wird zudem noch durch die mechanische Umformung des Vorformlings erhöht. Die Materialaussparung verleiht dem Bund auch eine erhöhte Elastizität in radialer Richtung.

Gemäß einer bevorzugten Ausführungsform der Erfindung liegt die erste Tiefe im Bereich von 50% bis 80%, bevorzugt 60% bis 70%, insbesondere 66% der zweiten Tiefe. Hierdurch wird Material für das Rad und somit Gewicht des Rads in einem Ausmaß eingespart, welches zum einen eine raschere Erstarrung des hinteren Hornbereichs in der Gussform zulässt und zum anderen noch keine ungünstige Schwächung des hinteren Hornbereichs durch eine zu tief gegossene Rille bewirkt.

Zur weiteren Erhöhung der mechanischen Belastbarkeit des Rads ist es günstig, wenn der Vorformling, zur Umformung, im der Materialaussparung entsprechenden Bereich bis zur zweiten Tiefe verdichtet, vorzugsweise geschmiedet wird. Die Verdichtung des Vorformlings im Erstreckungsbereich der Materialaussparung erfolgt zumindest in axialer, zum vorderen Hornbereich weisender Richtung. Die Verdichtung kann jedoch über den gesamten, durch die Materialaussparung definierten Oberflächenbereich des Bunds, d.h. auch an Seitenflächen der Rille oder Nut erfolgen. Im Gegensatz zu einem spanabhebenden Verfahren wird das Metallgefüge und somit der hintere Hornbereich durch die Verdichtung verstärkt. Besonders günstig erfolgt die Herstellung der finalen Rillentiefe im Bund durch einen Schmiedevorgang oder eine Drehbearbeitung.

Günstiger Weise kann vorgesehen sein, dass die die Materialaussparung und die Referenzebene umfassende hintere Stirnfläche des Bunds des Vorformlings bis zur Ausbildung der Materialaussparung mit der Rillentiefe umgeformt, vorzugsweise verdichtet, insbesondere geschmiedet wird. Hierdurch wird nicht nur die Materialaussparung, sondern die gesamte hintere Stirnfläche des Bunds umgeformt, sodass diese die gewünschte Form am fertiggestellten Rad annimmt. Die Verdichtung der hinteren Stirnfläche erfolgt zumindest in axialer, zum vorderen Hornbereich weisender Richtung. Die Umformung kann auch durch Drehbearbeitung erfolgen.

Eine hohe Materialeinsparung bei gleichzeitig hoher Belastbarkeit des hinteren Hornbereichs lässt sich vorteilhaft erzielen, wenn der Vorformling im der Materialaussparung entsprechenden Bereich in einer Ansicht in axialer Richtung des Vorformlings mit einem kreisringförmigen, vorzugsweise ebenen Rillenboden gegossen wird, an welchen eine radial weiter außen liegende, zumindest teilweise ebene Rillenflanke und eine radial weiter innen liegende, zumindest teilweise ebene Rillenflanke anschließt. Der kreisringförmige Rillenboden kann sich in einer zur Drehachse des Rads senkrechten Ebene erstrecken. Ebenso kann der Verlauf des kreisringförmigen Rillenbodens in radialer Richtung mit einem von 90° abweichenden Winkel zur Drehachse des Rads hergestellt, insbesondere gegossen und/oder umgeformt werden. Der Bund wird im durch die Materialaussparung definierten Bereich beim Gießen des Vorformlings und/oder beim Umformen zudem mit einer radial weiter außen liegenden Rillenflanke und einer radial weiter innen liegenden Rillenflanke geformt, die an den kreisringförmigen Rillenboden anschließen und zumindest teilweise ebene Abschnitte aufweisen. Für die Entnahme des Vorformlings aus der Gussform und zur Vermeidung von hohen Belastungen an Kantenbereichen zwischen dem Rillenboden und den Rillenflanken im Bund, im Betrieb des Rads, ist es zweckmäßig, wenn die beiden Rillenflanken mit einem gekrümmten Übergangsbereich, beispielsweise in Form eines Kreisbogens, an den Rillenboden anschließen. Besonders zweckmäßig für einen ruhigen Lauf des Rads wird die Materialaussparung mit einheitlicher Form und Rillentiefe in Umfangsrichtung des Bunds ausgebildet.

Besonders günstig für die Herstellung des Rads ist es, wenn der hintere Hornbereich mit einer vom Bund abgewandten zylindrischen Innenfläche in geradliniger Verlängerung einer zylindrischen Innenfläche des Felgenbetts gegossen wird. Die zylindrischen Innenflächen des hintere Hornbereichs und des Felgenbetts liegen den entsprechenden zylindrischen Außenflächen, an welchen ein am Rad monierter Reifen anliegt, gegenüber. Im Gegensatz zu dieser Ausbildung würde ein nach innen, in Richtung der Drehachse des Rads vorspringender umlaufender Ansatz am hinteren Hornbereich den Materialbedarf und die Zeitdauer für die Erstarrung des hinteren Hornbereichs unerwünscht erhöhen. Die Innenfläche des Bunds und des Felgenbetts müssen nicht exakt zylindrisch ausgebildet sein, sondern können selbstverständlich auch in Richtung zum vorderen Hornbereich zur Drehachse des Rads geneigt sein und somit die Form eines Kegelstumpfes aufweisen.

Erfindungsgemäß ist zudem eine Gussform zur Herstellung eines Rads, insbesondere eines Fahrzeugrads, mit dem zuvor beschriebenen Verfahren vorgesehen, mit einem Oberteil, einem Unterteil und zumindest zwei Seitenteilen, zwischen welchen ein der Negativform des gegossenen Vorformlings entsprechender Hohlraum ausgebildet ist, wobei das Oberteil oder das Unterteil eine der Negativform der durch Gießen herzustellenden Materialaussparung im Bund entsprechende Materialerhebung aufweist. Der in der Gussform bzw. Kokillenform ausgebildete Hohlraum wird beispielsweise durch einen zentralen Anguss der Gussform mit flüssigem Aluminium bzw. einer Aluminiumlegierung in einem Niederdruckgießverfahren gefüllt. Um den erstarren Vorformling aus der Gussform entnehmen zu können, sind, wie dem Fachmann bekannt ist, das Oberteil, das Unterteil und die Seitenteile voneinander trennbar ausgebildet. Das Oberteil oder das Unterteil weist eine umlaufende, sich ringförmig in den Hohlraum erstreckende und eine definierte Höhe aufweisende Materialerhebung auf, welche der Negativform der durch Gießen herzustellenden Materialaussparung im Bund entspricht. Die Materialerhebung ist somit in jenem Bereich des Hohlraums ausgebildet, in welchem die Materialaussparung entlang der hinteren Stirnfläche des Bunds hergestellt wird. Die Höhe der Materialerhebung entspricht, korrespondierend zur Materialaussparung im Bund des Vorformlings, dem Wert der ersten Tiefe, gemessen von der Referenzebene. Für weitere zweckmäßige Ausführungsformen der Materialerhebung der Gussform sei auf das zuvor beschriebene Verfahren und die noch folgende Beschreibung des Rads verwiesen, da die Materialerhebung eine Negativform zur Materialaussparung im Bund des durch Gießen hergestellten Vorformlings darstellt.

Der Vorformling lässt sich besonders einfach aus der Gussform entnehmen, wenn in der Materialerhebung zumindest ein Ausstoßelement, zur Anlage an der der Materialaussparung entsprechenden Oberfläche des Bunds und zum Ausstoßen des gegossenen Rads angeordnet ist. Das Ausstoßelement erstreckt sich somit durch das Oberteil oder das Unterteil der Gussform und insbesondere durch die Materialerhebung hindurch, in einer nicht ausstoßenden Ruheposition bis zum Hohlraum und in einer den Vorformling ausstoßenden Position darüber hinaus gegen den Vorformling. Zudem kann günstiger Weise durch den Spalt zwischen dem Ausstoßelement und dem dieses umgebenden Oberteil oder Unterteil, welcher Spalt für die Bewegung des Ausstoßelements nötig ist, Luft beim Befüllen der Gussform mit fließfähigem Material aus dem Hohlraum entweichen und hierdurch ein ungünstiger Druckaufbau im Hohlraum vermieden werden. Die sich durch das Ausstoßelement ergebenden Vorteile lassen sich noch erhöhen, wenn mehrere, vorzugsweise gleichmäßig entlang des Umfangs der Materialerhebung angeordnete Ausstoßelemente vorgesehen sind.

Erfindungsgemäß ist weiters für das Rad, insbesondere für das Fahrzeugrad, der eingangs genannten Art vorgesehen, dass im Bund eine umlaufende, sich rillenförmig entlang einer hinteren Stirnfläche des Bunds erstreckende Materialaussparung ausgebildet ist. Das Rad, beispielsweise zur Montage an einem mehrspurigen Kraftfahrzeug, weist einen Felgenkörper auf, an den ein vorderer Hornbereich anschließt. Dieser ist über ein Felgenbett mit einem gegenüberliegenden hinteren Hornbereich verbunden. Bekannter Weise dient das Felgenbett der Aufnahme eines am Rad montierten Reifens, welcher durch den vorderen Hornbereich und den hinteren Hornbereich in axialer Richtung der Rads festgehalten wird. Um dem Rad bzw. dem hinteren Hornbereich insbesondere in radialer Richtung, d.h. senkrecht zur axialen Richtung, Stabilität zu verleihen, weist der hintere Hornbereich einen umlaufenden, gegenüber dem Felgenbett verdickten Bund auf. Dieser erstreckt sich zumindest teilweise, vorzugsweise im Wesentlichen, in radialer Richtung des Rads. Damit das Rad geringes Gewicht und zugleich hohe Stabilität aufweist, ist im Bund eine umlaufende, sich rillenförmig entlang einer hinteren Stirnfläche des Bunds erstreckende Materialaussparung ausgebildet. Der hintere Hornbereich weist eine einzige solche Materialaussparung bzw. Vertiefung in Form einer Rille oder Nut auf, die in Umfangsrichtung entlang des Bunds in einer hinteren Stirnfläche des Bunds ausgebildet und vorzugsweise in sich geschlossen ist. Hinsichtlich der Definition der hinteren Stirnfläche des Bunds wird auf die Beschreibung des Verfahrens verwiesen.

Gemäß einer bevorzugten Ausführungsform des erfindungsgemäßen Rads weist die Materialaussparung in einer Ansicht in axialer Richtung des Rads einen kreisringförmigen, vorzugsweise ebenen Rillenboden auf, an welchen eine radial weiter außen liegende, zumindest teilweise ebene Rillenflanke und eine radial weiter innen liegende, zumindest teilweise ebene Rillenflanke anschließt. Wie schon im Zusammenhang mit dem Verfahren beschrieben wurde, kann der Verlauf des kreisringförmigen Rillenbodens, in radialer Richtung, einen Winkel von 90° oder einen von 90° abweichenden Winkel zur Drehachse des Rads aufweisen. Der Bund weist zudem eine radial weiter außen liegende Rillenflanke und eine radial weiter innen liegende Rillenflanke auf, die an den kreisringförmigen Rillenboden anschließen und zumindest teilweise ebene Abschnitte aufweisen. Günstiger Weise ist die Materialaussparung mit einheitlicher Form und einheitlicher Rillentiefe in Umfangsrichtung des Bunds ausgebildet. In einer Schnittdarstellung des Rads mit einer Ebene, in welcher die Drehachse des Rads verläuft, weist die Materialaussparung im Wesentlichen die Form eines um 90° gedrehten "U" auf.

Um sowohl eine zweckmäßige Materialeinsparung als auch ein Rad mit für seine Verwendung geeigneter Festigkeit zu erzielen, ist es günstig, wenn die Materialaussparung eine Rillentiefe im Bereich von 4 bis 9 mm, insbesondere von 5,9 mm, in Bezug auf den in axialer Richtung des Rads hintersten Punkt des Bunds aufweist, bei einer zumindest abschnittsweise verbleibenden Dicke des Bunds, in axialer Richtung vor der Materialaussparung, im Bereich von 5,5 bis 9,5 mm, insbesondere von 7,5 mm. Die Rillentiefe ist nicht auf die angegebenen Zahlenwerte begrenzt und kann ebenso im Bereich von 5 bis 8 mm oder im Bereich von 6 bis 7 mm liegen. Die Rillentiefe wird vom in axialer Richtung des Rads hintersten Punkt des Bunds, d.h. von jenem Punkt des Bunds gemessen, der dem Fahrzeug am nächsten liegt. Der Bund kann auf Grund seiner Formgebung in unterschiedlichen radialen Abständen von der Drehachse des Rads unterschiedliche Dicken, d.h. unterschiedliche Erstreckungen in axialer Richtung, aufweisen. Zumindest abschnittsweise weist die Dicke des Bunds, in axialer Richtung vom Fahrzeug weg betrachtet vor der Materialaussparung, einen Wert im Bereich von 5,5 bis 9,5 mm oder im Bereich von 6,5 bis 8,5 mm, insbesondere von 7,5 mm auf.

Vorteilhafter Weise kann vorgesehen sein, dass der kreisringförmige Rillenboden, zwischen gedachten Schnittlinien mit den beiden Rillenflanken, eine Erstreckung in radialer Richtung im Bereich von 10,5 bis 14,5 mm, insbesondere von 12,5 mm, aufweist, bei einer zumindest abschnittsweisen Höhe des Bunds, in radialer Richtung, im Bereich von 23 bis 27 mm, insbesondere von 24,9 mm. Für die gedachten Schnittlinien werden die ebenen Abschnitte der Rillenflanken bis zum Rillenboden gedanklich verlängert. Der kreisringförmige Rillenboden kann sich zwischen den gedachten Schnittlinien auch im Bereich von 11,5 bis 13,5 mm erstrecken. Die zumindest abschnittsweise Höhe des Bunds, in radialer Richtung, welche auch im Bereich von 24 bis 26 mm liegen kann, wird vorzugsweise an einer Position gemessen, die in axialer Richtung des Rads mit der Position des Rillenbodens oder der Rillenflanken zusammenfällt.

In einer weiteren Ausführungsform des Rads kann vorgesehen sein, dass die radial weiter außen liegende Rillenflanke einen ersten stumpfen Winkel, vorzugsweise im Bereich von 95° bis 120°, insbesondere von 108°, und die radial weiter innen liegende Rillenflanke einen zweiten stumpfen Winkel, vorzugsweise im Bereich von 105° bis 145°, insbesondere von 125°, zum Rillenboden aufweist. Jedoch sind auch Winkel im Bereich von 100° bis 115° oder im Bereich von 100° bis 110° für die radial weiter außen liegende Rillenflanke und Winkel im Bereich von 115° bis 135° für die radial weiter innen liegende Rillenflanke denkbar. Die Anordnung der Rillenflanken unter einem dieser stumpfen Winkel hat sich in Simulationen als besonders zweckmäßig erwiesen.

Um bei der Verwendung des Rads hoch belastete Kantenbereiche zwischen dem Rillenboden und den Rillenflanken zu vermeiden, ist es günstig, wenn die Materialaussparung, in einer Schnittansicht, einen kreisbogenförmigen Übergangsbereich zwischen dem Rillenboden und der radial weiter außen liegenden Rillenflanke und einen kreisbogenförmigen Übergangsbereich zwischen dem Rillenboden und der radial weiter innen liegenden Rillenflanke, vorzugsweise mit einem Radius des Kreisbogens im Bereich von 1 bis 4 mm, insbesondere von 2 mm, aufweist. Die Schnittansicht wird hierbei durch einen Schnitt des Bunds mit einer Ebene erhalten, in welcher die Drehachse des Rads verläuft. Der Radius der Kreisbögen kann auch im Bereich von 1 bis 3 mm oder im Bereich von 1,5 bis 2,5 mm liegen. Insbesondere können die beiden Kreisbögen den selben Radius aufweisen.

Des Weiteren kann es zweckmäßig sein, dass der hinterste Punkt des von der Materialaussparung radial weiter innen liegenden Bundabschnitts, im Vergleich zum hintersten Punkt des von der Materialaussparung radial weiter außen liegenden Bundabschnitts, vorzugsweise um eine Distanz im Bereich von 0,8 bis 1,8 mm, insbesondere von 1,3 mm, in axialer Richtung des Bunds weiter vorne liegt. Der von der Materialaussparung radial außen liegende Bereich des Bunds ist in diesem Fall mit seinem hintersten Punkt um die genannte Distanz näher am Fahrzeug angeordnet, als der hinterste Punkt des von der Materialaussparung radial innen liegende Bereichs des Bunds. Der Begriff des hintersten Punkts umfasst selbstverständlich auch eine Vielzahl von Punkten, beispielsweise eine Linie oder eine Fläche, sofern alle darauf befindlichen Punkte die selbe Position in axialer Richtung des Rads aufweisen. Die Distanz kann auch im Bereich von 1 bis 1,6 mm liegen.

Für die Ausbildung des Rads ist es weiterhin günstig, wenn der Bund, in einer Schnittansicht, mit einem ersten kreisbogenförmigen Übergangsbereich, vorzugsweise mit einem Radius im Bereich von 1 bis 4 mm, insbesondere von 2 mm, von der radial weiter außen liegenden Rillenflanke zum hintersten Punkt des von der Materialaussparung radial weiter außen liegenden Bundabschnitts ausgebildet ist. Die Schnittansicht wird hierbei durch einen Schnitt des Bunds mit einer Ebene erhalten, in welcher die Drehachse des Rads verläuft. Insbesondere erstreckt sich der erste kreisbogenförmige Übergangsbereich vom ebenen Abschnitt der radial weiter außen liegenden Rillenflanke zum hintersten Punkt des von der Materialaussparung radial außen liegenden Bereichs des Bunds, d.h. zum hintersten Punkt von diesem Bundabschnitt. Der Radius des ersten Übergangsbereichs kann auch im Bereich von 1,5 bis 3 mm liegen.

Ebenso ist es günstig, wenn der Bund, in einer Schnittansicht, mit einem zweiten kreisbogenförmigen Übergangsbereich, vorzugsweise mit einem Radius im Bereich von 1 bis 3 mm, insbesondere von 1,6 mm, von der radial weiter innen liegenden Rillenflanke zum hintersten Punkt des von der Materialaussparung radial weiter innen liegenden Bundabschnitts ausgebildet ist. Auch hier wird die Schnittansicht durch einen Schnitt des Bunds mit einer Ebene erhalten, in welcher die Drehachse des Rads verläuft. Vorzugsweise erstreckt sich der zweite kreisbogenförmige Übergangsbereich vom ebenen Abschnitt der radial weiter innen liegenden Rillenflanke zum hintersten Punkt des von der Materialaussparung radial innen liegenden Bereichs des Bunds. Der Radius des zweiten Übergangsbereichs kann auch im Bereich von 1,3 bis 2 mm liegen.

Eine gewichtssparende und besonders einfache Ausführung des hohe Festigkeit aufweisenden Rads lässt sich erzielen, wenn der hintere Hornbereich mit einer vom Bund abgewandten zylindrischen Innenfläche in geradliniger Verlängerung einer zylindrischen Innenfläche des Felgenbetts ausgebildet ist. Das Rad weist somit keine gewichtserhöhenden Materialvorsprünge auf, die von der zylindrischen Innenfläche des hinteren Hornbereichs in Richtung zur Drehachse des Rads vorspringen. Die zylindrische Innenfläche des hinteren Hornbereichs ist somit zumindest zu jenem Abschnitt der zylindrischen Innenfläche des Felgenbetts gleich ausgebildet, welcher an die zylindrische Innenfläche des hinteren Hornbereichs anschließt.

Der Bund kann vorteilhafter Weise zusätzlich derart geformt sein, dass in einer Schnittansicht an den hintersten Punkt des von der Materialaussparung radial weiter außen liegenden Bundabschnitts ein dritter kreisbogenförmiger Übergangsbereich, ein vierter kreisbogenförmiger Übergangsbereich und ein sich in radialer Richtung geradlinig in Richtung der Drehachse das Rads erstreckender Abschnitt anschließt, welcher entlang einem fünften kreisbogenförmigen Übergangsbereich in das Felgenbett übergeht. Die Schnittansicht wird durch einen Schnitt des Bunds mit einer Ebene erhalten, in welcher die Drehachse des Rads verläuft. Der dritte kreisbogenförmige Übergangsbereich kann einen Radius im Bereich von 2,5 bis 4,5 mm, insbesondere von 3,5 mm, der vierte kreisbogenförmige Übergangsbereich einen Radius im Bereich von 9 bis 11 mm, insbesondere von 9,8 mm und der fünfte kreisbogenförmige Übergangsbereich einen Radius im Bereich von 4 bis 6 mm, insbesondere von 5 mm aufweisen. Der an den fünften kreisbogenförmigen Übergangsbereich anschließende Abschnitt des Felgenbetts kann eine der zylindrischen Innenfläche gegenüberliegende zylindrische Außenfläche aufweisen, die unter einem von null verschiedenen Winkel, beispielsweise unter einem Winkel im Bereich von 3° bis 7°, vorzugsweise von 4° bis 6°, insbesondere von 5°, in Richtung zum vorderen Hornbereich, zur Drehachse des Rads geneigt ist. Zumindest abschnittsweise weist das Felgenbett eine sich zwischen seiner zylindrischen Innenfläche und seiner zylindrischen Außenfläche erstreckende Dicke beispielsweise im Bereich von 4 bis 8 mm, vorzugsweise von 5 bis 7 mm, insbesondere von 6 mm auf.

Die Erfindung wird im Folgenden anhand von bevorzugten Ausführungsformen, auf welche sie jedoch nicht beschränkt sein soll, noch weiter erläutert. In den Zeichnungen zeigen:
Fig. 1 eine Gussform mit einem darin gegossenen Vorformling des herzustellenden Rads, in einer Schnittansicht;
Fig. 2 eine vergrößerte Darstellung eines Abschnitts der Gussform und des hinteren Hornbereichs des Vorformlings, in einer Schnittansicht;
Fig. 3 den hinteren Hornbereich sowie einen Abschnitt des Felgenbetts des Vorformlings und des Rads gemäß der Erfindung, in einer Schnittansicht; und
Fig. 4 einen an ein Felgenbett anschließenden hinteren Hornbereich mit einem Bund eines Rads gemäß der Erfindung, in einer Schnittansicht.

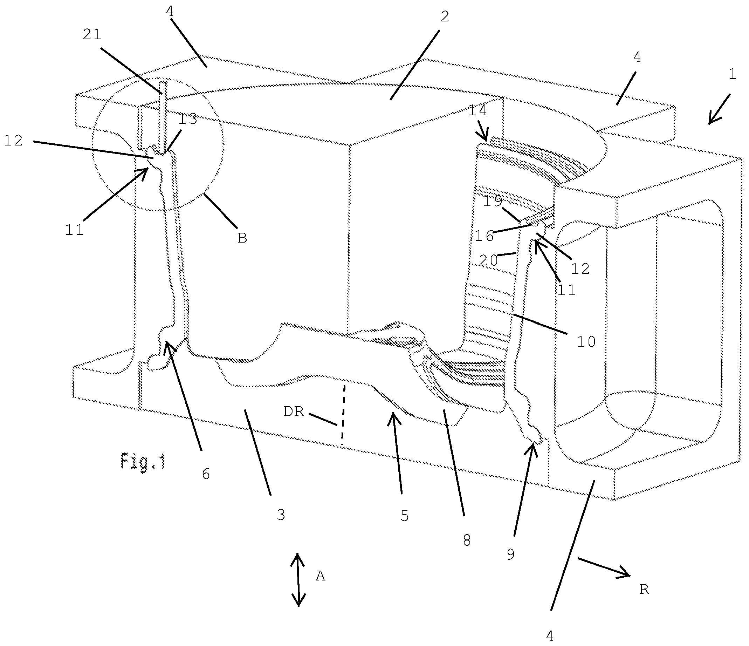

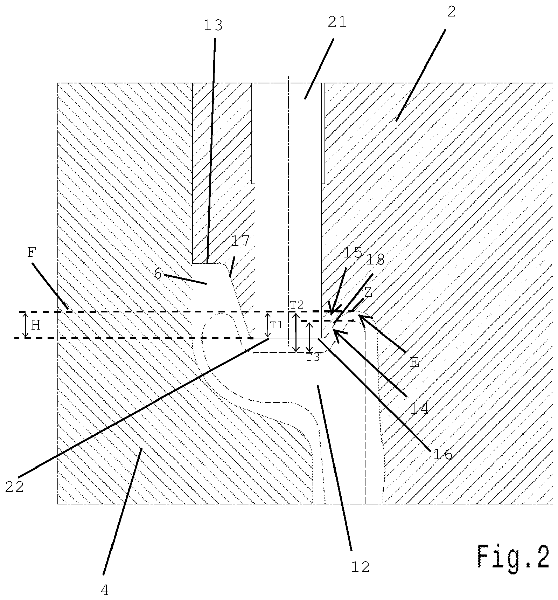

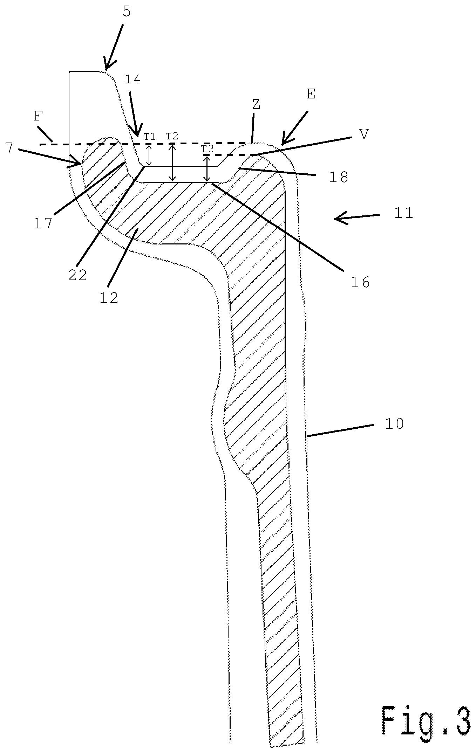

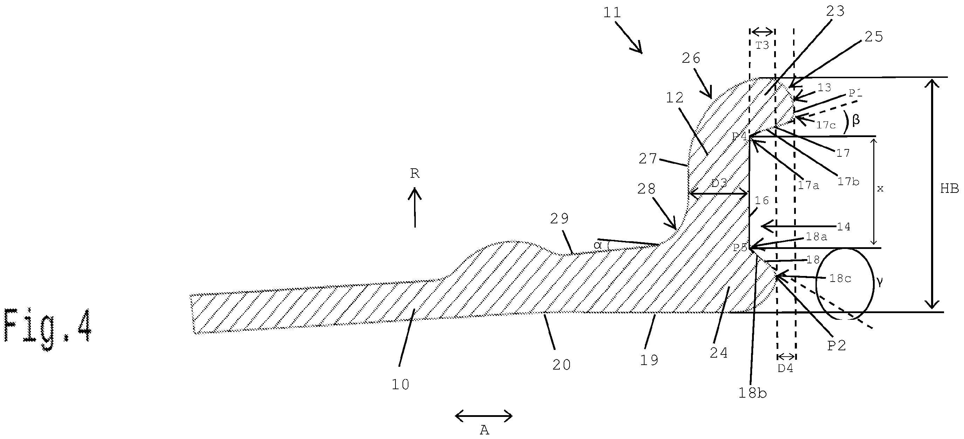

Fig. 1 zeigt in einer Schnittansicht eine Gussform 1 mit einem Oberteil 2, einem Unterteil 3 und mit drei von vier Seitenteilen 4, zwischen welchen ein Hohlraum 6 ausgebildet ist, welcher der Negativform des zu gießenden Vorformlings 5 entspricht. Zur einfachen Entnahme des erstarrten Vorformlings 5 aus der Gussform 1 sind das Oberteil 2, das Unterteil 3 und die Seitenteile 4 voneinander trennbar ausgebildet. In Fig. 1 ist der Hohlraum 6 bereits mit einem Vorformling 5 ausgefüllt, welcher jedoch, zur Vereinfachung der Darstellung, in Form des fertiggestellten Rads 7 gezeigt ist. So wie das fertiggestellte Rad 7 weist der Vorformling 5 einen Felgenkörper 8 auf, an den ein vorderer Hornbereich 9 anschließt. Dieser ist, ebenfalls wie beim Rad 7, über ein Felgenbett 10 mit einem gegenüberliegenden hinteren Hornbereich 11 verbunden, der einen umlaufenden, gegenüber dem Felgenbett 10 verdickten Bund 12 aufweist. Der Bund 12 des Vorformlings 5 bzw. des Rads 7 ist mit einer umlaufenden, sich rillenförmig im Bund 12, entlang einer hinteren Stirnfläche 13 des Bunds 12 erstreckenden Materialaussparung 14 ausgebildet. Im fertiggestellten Rad 7 ist die Materialaussparung 14 im Bund 12 mit einer definierten Rillentiefe T3 (siehe Fig. 4) ausgebildet. Die Materialaussparung 14 wird jedoch beim Gießen des Vorformlings 5 zunächst mit einer ersten Tiefe T1, gemessen von einer Referenzebene F, hergestellt und anschließend im ausgehärteten Vorformling 5 bis zur Ausbildung der zweiten Tiefe T2, gemessen von derselben Referenzebene F, umgeformt. Die Referenzebene F verläuft hierbei im Wesentlich senkrecht zu einer Drehachse DR des Rads 7 und durch einen hinteren Scheitelpunkt Z eines in direkter bzw. geradliniger Verlängerung des Felgenbetts 10 angeordneten Abschnitts E der hinteren Stirnfläche 13 des gegossenen, noch nicht umgeformten Vorformlings 5. Vorzugsweise wird für die Umformung jener Bereich des Bunds 12, in welchem die Materialaussparung 14 ausgebildet ist, durch Schmieden verdichtet. Insbesondere wird die gesamte hintere Stirnfläche 13 verdichtet bzw. geschmiedet, um das Rad 7 mit der die Rillentiefe T3 aufweisenden Materialaussparung 14 zu formen. Die Umformung kann auch durch Drehbearbeitung erfolgen. Als Folge der Umformung der gesamten hinteren Stirnfläche 13 nimmt auch ein hinterer Scheitelpunkt V des in direkter bzw. geradliniger Verlängerung des Felgenbetts 10 angeordneten Abschnitts E der hinteren Stirnfläche 13 des bereits umgeformten Vorformlings 5 eine weiter vorne liegenden Position als der Referenz- bzw Scheitelpunkt Z ein. Wenn der Abschnitt E der hinteren Stirnfläche 13 im gleichen Ausmaß wie die Materialaussparung 14 verdichtet wird, kann die Rillentiefe T3 den gleichen Wert wie die erste Tiefe T1 aufweisen, siehe auch Fig. 2 und 3. Andernfalls kann die Rillentiefe T3 größer oder kleiner als die erste Tiefe T1 sein.

Zum Gießen des Vorformlings 5 wird der Hohlraum 6 beispielsweise durch einen nicht dargestellten zentralen Anguss der Gussform 1 mit flüssigem Aluminium bzw. einer Aluminiumlegierung in einem Niederdruckgießverfahren gefüllt. Um die Materialaussparung 14 im Vorformling 5 herzustellen, weist das Oberteil 2 eine umlaufende, sich ringförmig in den Hohlraum 6 erstreckende und eine definierte Höhe H aufweisende Materialerhebung 15 auf, welche der Negativform der durch Gießen herzustellenden Materialaussparung 14 im Bund 12 entspricht. Dies ist deutlich in Fig. 2 dargestellt, welche eine vergrößerte Ansicht des Abschnitts B aus Fig. 1 zeigt. Die Höhe H der Materialerhebung 15 liegt, so wie die erste Tiefe T1 der Materialaussparung 14 im Bund 12 des Vorformlings 5, im Bereich von 50% bis 80%, bevorzugt 60% bis 70%, insbesondere bei 66% des Werts der zweiten Tiefe T2.

Wie zudem in den Figuren 1 und 2 zu erkennen ist, wird der Vorformling 5 vorzugsweise derart gegossen, dass die Materialaussparung 14 einen kreisringförmigen, ebenen Rillenboden 16 aufweist. An diesen Rillenboden 16 schließt eine radial weiter außen liegende Rillenflanke 17 und eine radial weiter innen liegende Rillenflanke 18 an, welche beide zumindest in einem Abschnitt eben ausgebildet sind. Es ist jedoch ebenso möglich, den Rillenboden 16 und/oder die Rillenflanken 17, 18 uneben zu gießen und die ebene Ausbildung des Rillenbodens 16 und/oder die Ausbildung der ebenen Abschnitte der Rillenflanken 17, 18 erst durch den nachfolgenden Umformvorgang herzustellen.

In Fig. 1 ist auch erkennbar, dass der hintere Hornbereich 11 eine zylindrische bzw. kegelstumpfförmige Innenfläche 19 aufweist, die in geradliniger Verlängerung einer zylindrischen bzw. kegelstumpfförmigen Innenfläche 20 des Felgenbetts 10 gegossen wird.

Fig. 1 und 2 zeigen zudem beispielhaft ein Ausstoßelement 21 im Oberteil 2 und in der Materialerhebung 15, mit welchem der erstarrte Vorformling 5 einfach aus der Gussform 1 ausgestoßen werden kann. Hierfür liegt das Ausstoßelement 21 an der der Materialaussparung 14 entsprechenden Oberfläche 22 des Bunds 12 an.

Die Form des in der Gussform 1 hergestellten Vorformlings 5 kann jedenfalls mit Ausnahme der durch Umformen fertigzustellenden Ausbildung der Materialaussparung 14 bzw. mit Ausnahme der durch Umformen fertigzustellenden Ausbildung der hinteren Stirnfläche 13 mit der Form des Rads 7 im Wesentlichen identisch sein. Insbesondere kann der Felgenkörper 8, der vordere Hornbereich 9 und das Felgenbett 10 vom Umformvorgang nicht betroffen und somit für den Vorformling 5 und das Rad 7 identisch sein.

Fig. 3 zeigt in einer gemeinsamen Ansicht übereinander gelegte Schnittansichten des hinteren Hornbereichs 11 und des daran anschließenden Abschnitts des Felgenbetts 10 jeweils für den Vorformling 5 und das Rad 7. Hierbei ist die durch Umformen verringerte Schnittfläche des Rads 7 schraffiert dargestellt. Im Beispiel der Fig. 3 ist der gesamte hintere Hornbereich 11 und der daran anschließende Abschnitt des Felgenbetts 10 umgeformt.

In Fig. 4 ist der hintere Hornbereich 11 eines Rads 7, in einer Schnittansicht oberhalb der Drehachse DR des Rads 7, dargestellt. Der hintere Hornbereich 11 schließt an das nicht im Detail dargestellte Felgenbett 10 an. Der hintere Hornbereich 11 weist den umlaufenden, gegenüber dem Felgenbett 10 verdickten Bund 12 auf, in welchem die umlaufende, sich rillenförmig entlang der hinteren Stirnfläche 13 des Bunds 12 erstreckende Materialaussparung 14 ausgebildet ist. Die Materialaussparung 14 ist mit dem kreisringförmigen, ebenen Rillenboden 16 ausgebildet, an welchen die radial weiter außen liegende, zumindest teilweise ebene Rillenflanke 17 und die radial weiter innen liegende, zumindest teilweise ebene Rillenflanke 18 anschließt. In Fig. 4 ist die radiale Richtung mit R und die axiale Richtung mit A gekennzeichnet. Zwischen dem Rillenboden 16 und jeder der Rillenflanken 17, 18 ist ein kreisbogenförmiger Übergangsbereich 17a, 18a vorgesehen. Der hinterste Punkt P1 des von der Materialaussparung 14 radial weiter außen liegenden Bundabschnitts 23 ist gegenüber dem hintersten Punkt P2 des von der Materialaussparung 14 radial weiter innen liegenden Bundabschnitts 24 in axialer Richtung A nach hinten versetzt. Der ebene Abschnitt 17b der radial weiter außen liegenden Rillenflanke 17 ist mittels eines ersten kreisbogenförmigen Übergangsbereichs 17c mit dem hintersten Punkt P1 des Bundabschnitts 23 verbunden. Ebenso ist der ebene Abschnitt 18b der radial weiter innen liegenden Rillenflanke 18 mittels eines zweiten kreisbogenförmigen Übergangsbereichs 18c mit dem hintersten Punkt P2 des Bundabschnitts 24 verbunden. Der zweite kreisbogenförmige Übergangsbereich 18c erstreckt sich vorzugsweise bis zur zylindrischen bzw. kegelstumpfförmigen Innenfläche 19 des hinteren Hornbereichs 11, welche Innenfläche 19 in geradliniger Verlängerung der zylindrischen bzw. kegelstumpfförmigen Innenfläche 20 des Felgenbetts 10 ausgebildet ist. Der Bund 12 weist ausgehend vom hintersten Punkt P1 des Bundabschnitts 23 einen dritten kreisbogenförmigen Übergangsbereich 25, einen vierten kreisbogenförmigen Übergangsbereich 26 und einen sich entgegen der radialen Richtung R geradlinig in Richtung zur Drehachse des Rads 7 erstreckenden Abschnitt 27 auf, welcher entlang einem fünften kreisbogenförmigen Übergangsbereich 28 an einem Punkt P3 in das Felgenbett 10 übergeht. Vom Punkt P3, bei welchem die Dicke D1 des Felgenbetts 10 beispielsweise 7,6 mm beträgt, verläuft die zylindrische bzw. kegelstumpfförmige Außenfläche 29 des Felgenbetts 10 in einem Winkel α von 5° bis zu einer Dicke D2 des Felgenbetts 10 von 6 mm.

Im bevorzugten Ausführungsbeispiel beträgt die Rillentiefe T3 der Materialaussparung 14 5,9 mm, gemessen in axialer Richtung A des Rads 7 vom hintersten Punkt P1 des Bunds 12. In axialer Richtung A vor der Materialaussparung 14 weist der Bund 12 zwischen dem in der Schnittansicht geradlinigen Abschnitt 27 und dem Rillenboden 16 eine Dicke D3 von 7,5 mm auf. Zwischen gedachten Schnittlinien P4, P5 der beiden Rillenflanken 17, 18 mit dem Rillenboden 16, beträgt die Erstreckung X des Rillenbodens 16 in radialer Richtung R 12,5 mm, wobei der Bund 12 eine maximale Höhe HB, in axialer Richtung A im Bereich der Materialaussparung 14, von 24,9 mm aufweist. Die radial weiter außen liegende Rillenflanke 17 weist einen ersten stumpfen Winkel β von 108° und die radial weiter innen liegende Rillenflanke 18 weist einen zweiten stumpfen Winkel γ von 125° zum Rillenboden 16 auf. Der kreisbogenförmige Übergangsbereich 17a, 18a zwischen dem Rillenboden 16 und den jeweiligen Rillenflanken 17 und 18 weist einen Radius des Kreisbogens von 2 mm auf. Der Abstand D4 zwischen dem hintersten Punkt P1 des Bundabschnitts 23 und dem hintersten Punkt P2 des Bundabschnitts 24 beträgt 1,3 mm, gemessen in axialer Richtung A des Rads 7. Der erste kreisbogenförmige Übergangsbereich 17c weist einen Radius von 2 mm auf, während der zweite kreisbogenförmige Übergangsbereich 18c mit einem Radius von 1,6 mm ausgebildet ist. Der Radius des dritten kreisbogenförmigen Übergangsbereichs 25 beträgt 3,5 mm, jener des vierten kreisbogenförmigen Übergangsbereichs 9,8 mm und jener des fünften kreisbogenförmigen Übergangsbereichs beträgt 5 mm.

Selbstverständlich können auch bei dem in Fig. 4 dargestellten Ausführungsbeispiel die angegebenen Abmessungen herstellungsbedingten Toleranzen unterliegen.

Das hierin beschriebene Verfahren, die Gussform 1 und das Rad 7, ermöglichen die Herstellung eines Rads 7 bzw. legen ein solches Rad 7 fest, welches sich durch geringes Gewicht, einen beschleunigten Herstellungsvorgang und hohe Festigkeit, insbesondere bei Belastungen des Rads 7 in radialer Richtung, auszeichnet.

## Patentansprüche

1. Verfahren zur Herstellung eines Rads (7), insbesondere eines Fahrzeugrads, mit einem Felgenkörper (8), an den ein vorderer Hornbereich (9) anschließt, der über ein Felgenbett (10) mit einem gegenüberliegenden hinteren Hornbereich (11) verbunden ist, der einen umlaufenden, gegenüber dem Felgenbett (10) verdickten Bund (12) aufweist, wobei mittels Gießen ein Vorformling (5) gebildet wird, welcher zum fertigen Rad (7) umgeformt wird, **dadurch gekennzeichnet, dass** für die Herstellung des Rads (7) mit einer umlaufenden, sich rillenförmig im Bund (12), entlang einer hinteren Stirnfläche (13) des Bunds (12) erstreckenden und eine definierten Rillentiefe (T3) aufweisenden, in sich geschlossenen Materialaussparung (14), die Materialaussparung (14) beim Gießen des Vorformlings (5) zunächst mit einer ersten Tiefe (T1) hergestellt wird, und anschließend bis zur Ausbildung einer zweiten Tiefe (T2) umgeformt wird, welche größer als die erste Tiefe (T1) ist, wobei die Tiefe (T1, T2) jeweils ausgehend von einer Referenzebene (F) bestimmt wird, welche im Wesentlichen senkrecht zu eine Drehachse des Rads (7) und durch einen hinteren Scheitelpunkt (Z) eines in Verlängerung des Felgenbetts (10) angeordneten Abschnitts (E) der hinteren Stirnfläche (13) des gegossenen, nicht umgeformten Vorformlings (5) verlaufend angeordnet ist.

2. Verfahren nach Anspruch 1, **dadurch gekennzeichnet, dass** die erste Tiefe (T1) im Bereich von 50% bis 80%, bevorzugt 60% bis 70%, insbesondere 66% der zweiten Tiefe (T2) beträgt.

3. Verfahren nach Anspruch 1 oder 2, **dadurch gekennzeichnet, dass** der Vorformling (5), zur Umformung, im der Materialaussparung (14) entsprechenden Bereich bis zur zweiten Tiefe (T2) verdichtet, vorzugsweise geschmiedet, oder drehbearbeitet wird.

4. Verfahren nach einem der Ansprüche 1 bis 3, **dadurch gekennzeichnet, dass** die die Materialaussparung (14) und den Referenzpunkt (Z) aufweisende hintere Stirnfläche (13) des Bunds (12) des Vorformlings (5) bis zur Ausbildung der Materialaussparung (14) mit der Rillentiefe (T3) umgeformt, vorzugsweise verdichtet, insbesondere geschmiedet, oder drehbearbeitet wird.

5. Verfahren nach einem der Ansprüche 1 bis 4, **dadurch gekennzeichnet, dass** der Vorformling (5) im der Materialaussparung (14) entsprechenden Bereich in einer Ansicht in axialer Richtung (A) des Vorformlings (5) mit einem kreisringförmigen, vorzugsweise ebenen Rillenboden (16) gegossen wird, an welchen eine radial weiter außen liegende, zumindest teilweise ebene Rillenflanke (17) und eine radial weiter innen liegende, zumindest teilweise ebene Rillenflanke (18) anschließt.

6. Verfahren nach einem der Ansprüche 1 bis 5, **dadurch gekennzeichnet, dass** der hintere Hornbereich (11) mit einer vom Bund (12) abgewandten zylindrischen Innenfläche (19) in geradliniger Verlängerung einer zylindrischen Innenfläche (20) des Felgenbetts (10) gegossen wird.

7. Gussform (1) zur Herstellung eines Rads (7), insbesondere eines Fahrzeugrads, mit einem Verfahren nach einem der Ansprüche 1 bis 6, mit einem Oberteil (2), einem Unterteil (3) und zumindest zwei Seitenteilen (4), zwischen welchen ein der Negativform des gegossenen Vorformlings (5) entsprechender Hohlraum (6) ausgebildet ist, wobei das Oberteil (2) oder das Unterteil (3) eine der Negativform der durch Gießen herzustellenden Materialaussparung (14) im Bund (12) entsprechende Materialerhebung (15) aufweist.

8. Gussform (1) nach Anspruch 7, **dadurch gekennzeichnet, dass** in der Materialerhebung (15) zumindest ein Ausstoßelement (21), zur Anlage an der der Materialaussparung (14) entsprechenden Oberfläche (22) des Bunds (12) und zum Ausstoßen des gegossenen Rads (7) angeordnet ist.

9. Rad (7), insbesondere Fahrzeugrad, mit einem Felgenkörper (8), an den ein vorderer Hornbereich (9) anschließt, der über ein Felgenbett (10) mit einem gegenüberliegenden hinteren Hornbereich (11) verbunden ist, der einen umlaufenden, gegenüber dem Felgenbett (10) verdickten Bund (12) aufweist, **dadurch gekennzeichnet, dass** im Bund (12) eine umlaufende, sich rillenförmig entlang einer hinteren Stirnfläche (13) des Bunds (12) erstreckende, in sich geschlossene Materialaussparung (14) ausgebildet ist, welche Materialaussparung (14) in einer Ansicht in axialer Richtung (A) des Rads (7) einen kreisringförmigen, vorzugsweise ebenen Rillenboden (16) aufweist, an welchen eine radial weiter außen liegende, zumindest teilweise ebene Rillenflanke (17) und eine radial weiter innen liegende, zumindest teilweise ebene Rillenflanke (18) anschließt, wobei vorzugsweisedie Materialaussparung (14) eine Rillentiefe (T3) im Bereich von 4 bis 9 mm, insbesondere von 5,9 mm, in Bezug auf den in axialer Richtung (A) des Rads (7) hintersten Punkt (P1) des Bunds (12) aufweist, bei einer zumindest abschnittsweise verbleibenden Dicke (D3) des Bunds (12), in axialer Richtung (A) vor der Materialaussparung (14), im Bereich von 5,5 bis 9,5 mm, insbesondere von 7,5 mm und/oder vorzugsweise der kreisringförmige Rillenboden (16), zwischen gedachten Schnittlinien (P4, P5) mit den beiden Rillenflanken (17, 18), eine Erstreckung (X) in radialer Richtung (R) im Bereich von 10,5 bis 14,5 mm, insbesondere von 12,5 mm, aufweist, bei einer zumindest abschnittsweisen Höhe (HB) des Bunds (12), in radialer Richtung (R), im Bereich von 23 bis 27 mm, insbesondere von 24,9 mm.

10. Rad (7) nach Anspruch 9 , **dadurch gekennzeichnet, dass** die radial weiter außen liegende Rillenflanke (17) einen ersten stumpfen Winkel (β), vorzugsweise im Bereich von 95° bis 120°, insbesondere von 108°, und die radial weiter innen liegende Rillenflanke (18) einen zweiten stumpfen Winkel (γ), vorzugsweise im Bereich von 105° bis 145°, insbesondere von 125°, zum Rillenboden (16) aufweist.

11. Rad (7) nach einem der Ansprüche 9 bis 10 **dadurch gekennzeichnet, dass** die Materialaussparung (14), in einer Schnittansicht, einen kreisbogenförmigen Übergangsbereich (17a) zwischen dem Rillenboden (16) und der radial weiter außen liegenden Rillenflanke (17) und einen kreisbogenförmigen Übergangsbereich (18a) zwischen dem Rillenboden (16) und der radial weiter innen liegenden Rillenflanke (18), vorzugsweise mit einem Radius des Kreisbogens im Bereich von 1 bis 4 mm, insbesondere von 2 mm, aufweist.

12. Rad (7) nach einem der Ansprüche 9 bis 11, **dadurch gekennzeichnet, dass** der hinterste Punkt (P2) des von der Materialaussparung (14) radial weiter innen liegenden Bundabschnitts (24), im Vergleich zum hintersten Punkt (P1) des von der Materialaussparung (14) radial weiter außen liegenden Bundabschnitts (23), vorzugsweise um eine Distanz (D4) im Bereich von 0,8 bis 1,8 mm, insbesondere von 1,3 mm, in axialer Richtung (A) des Bunds (12) weiter vorne liegt.

13. Rad (7) nach einem der Ansprüche 9 bis 12, **dadurch gekennzeichnet, dass** der Bund (12), in einer Schnittansicht, mit einem ersten kreisbogenförmigen Übergangsbereich (17c), vorzugsweise mit einem Radius im Bereich von 1 bis 4 mm, insbesondere von 2 mm, von der radial weiter außen liegenden Rillenflanke (17) zum hintersten Punkt (P1) des von der Materialaussparung (14) radial weiter außen liegenden Bundabschnitts (23) ausgebildet ist.

14. Rad (7) nach einem der Ansprüche 9 bis 13, **dadurch gekennzeichnet, dass** der Bund (12), in einer Schnittansicht, mit einem zweiten kreisbogenförmigen Übergangsbereich (18c), vorzugsweise mit einem Radius im Bereich von 1 bis 3 mm, insbesondere von 1,6 mm, von der radial weiter innen liegenden Rillenflanke (18) zum hintersten Punkt (P2) des von der Materialaussparung (14) radial weiter innen liegenden Bundabschnitts (24) ausgebildet ist.

15. Rad (7) nach einem der Ansprüche 9 bis 14, **dadurch gekennzeichnet, dass** der hintere Hornbereich (11) mit einer vom Bund (12) abgewandten zylindrischen Innenfläche (19) in geradliniger Verlängerung einer zylindrischen Innenfläche (20) des Felgenbetts (10) ausgebildet ist.

## Claims

1. Method for producing a wheel (7), in particular a vehicle wheel, comprising a rim body (8) to which a front flange region (9) connects, which region is connected via a rim base (10) to an opposite rear flange region (11) which comprises a circumferential collar (12) which is thickened relative to the rim base (10), a preform (5) being formed by casting, which preform is shaped into the finished wheel (7), **characterised in that**, for the production of the wheel (7) which has a circumferential, self-contained material recess (14) which extends in the collar (12) in a groove-like manner along a rear end face (13) of the collar (12) and has a defined groove depth (T3), the material recess (14) is first produced having a first depth (T1) during casting of the preform (5), and then shaped until a second depth (T2) is formed which is greater than the first depth (T1), the depth (T1, T2) being determined in each case on the basis of a reference plane (F) which is arranged substantially perpendicular to a rotary axis of the wheel (7) and so as to extend through a rear vertex (Z) of a portion (E) of the rear end face (13) of the cast unshaped preform (5), which portion is arranged in extension of the rim base (10).

2. Method according to claim 1, **characterised in that** the first depth (T1) is in the range of 50% to 80%, preferably 60% to 70%, in particular 66% of the second depth (T2).

3. Method according to either claim 1 or claim 2, **characterised in that**, for shaping, the preform (5) is compacted, preferably forged, or rotationally machined, to the second depth (T2) in the region corresponding to the material recess (14).

4. Method according to any of claims 1 to 3, **characterised in that** the rear end face (13) of the collar (12) of the preform (5), which rear end face comprises the material recess (14) and the reference point (Z), is shaped, preferably compacted, in particular forged, or rotationally machined, until the material recess (14) having the groove depth (T3) is formed.

5. Method according to any of claims 1 to 4, **characterised in that** the preform (5), in the region which corresponds to the material recess (14), in a view in the axial direction (A) of the preform (5), is cast comprising an annular, preferably planar groove bottom (16), to which a radially further outer, at least partially planar groove flank (17) and a radially further inner, at least partially planar groove flank (18) connects.

6. Method according to any of claims 1 to 5, **characterised in that** the rear flange region (11) is cast so as to have a cylindrical inner surface (19) which faces away from the collar (12) as a straight extension of a cylindrical inner surface (20) of the rim base (10).

7. Casting mould (1) for producing a wheel (7), in particular a vehicle wheel, using a method according to any of claims 1 to 6, the casting mould comprising an upper part (2), a lower part (3) and at least two side parts (4), between which a cavity (6) corresponding to the negative mould of the cast preform (5) is formed, wherein the upper part (2) or the lower part (3) comprises a material elevation (15) which corresponds to the negative mould of the material recess (14) in the collar (12) that is to be produced by casting.

8. Casting mould (1) according to claim 7, **characterised in that** at least one ejection element (21) is arranged in the material elevation (15) in order to abut the surface (22) of the collar (12) that corresponds to the material recess (14) and in order to eject the cast wheel (7).

9. Wheel (7), in particular a vehicle wheel, comprising a rim body (8) to which a front flange region (9) connects, which region is connected via a rim base (10) to an opposite rear flange region (11) which comprises a circumferential collar (12) that is thickened relative to the rim base (10), **characterised in that** a circumferential, self-contained material recess (14) which extends in a groove-like manner along a rear end face (13) of the collar (12) is formed in the collar (12), which material recess (14), in a view in the axial direction (A) of the wheel (7), has an annular, preferably planar groove bottom (16) to which a radially further outer, at least partially planar groove flank (17) and a radially further inner, at least partially planar groove flank (18) connects, the material recess (14) preferably having a groove depth (T3) in the range of 4 to 9 mm, in particular of 5.9 mm, in relation to the rearmost point (P1) of the collar (12) in the axial direction (A) of the wheel (7), at a thickness (D3) of the collar (12) that remains at least in sections, in the axial direction (A) in front of the material recess (14), in the range of 5.5 to 9.5 mm, in particular of 7.5 mm, and/or the annular groove bottom (16), between imaginary intersection lines (P4, P5) with the two groove flanks (17, 18), preferably having an extension (X) in the radial direction (R) in the range of 10.5 to 14.5 mm, in particular of 12.5 mm, at a height (HB) of the collar (12) at least in portions, in the radial direction (R), in the range of 23 to 27 mm, in particular of 24.9 mm.

10. Wheel (7) according to claim 9, **characterised in that** the radially further outer groove flank (17) has a first obtuse angle (β), preferably in the range of 95° to 120°, in particular of 108°, and the radially further inner groove flank (18) has a second obtuse angle (γ), preferably in the range of 105° to 145°, in particular of 125°, with respect to the groove bottom (16).

11. Wheel (7) according to either claim 9 or claim 10, **characterised in that**, in a sectional view, the material recess (14) has an arcuate transition region (17a) between the groove bottom (16) and the radially further outer groove flank (17) and an arcuate transition region (18a) between the groove bottom (16) and the radially further inner groove flank (18), preferably having a circular arc radius in the range of 1 to 4 mm, in particular of 2 mm.

12. Wheel (7) according to any of claims 9 to 11, **characterised in that** the rearmost point (P2) of the collar portion (24) which is radially further inwards from the material recess (14) is positioned further forward in the axial direction (A) of the collar (12), preferably by a distance (D4) in the range of 0.8 to 1.8 mm, in particular of 1.3 mm, by comparison with the rearmost point (P1) of the collar portion (23) which is radially further outwards from the material recess (14).

13. Wheel (7) according to any of claims 9 to 12, **characterised in that**, in a sectional view, the collar (12) is formed comprising a first arcuate transition region (17c), preferably having a radius in the range of 1 to 4 mm, in particular of 2 mm, from the radially further outer groove flank (17) to the rearmost point (P1) of the collar portion (23) which is radially further outwards from the material recess (14).

14. Wheel (7) according to any of claims 9 to 13, **characterised in that**, in a sectional view, the collar (12) is formed comprising a second arcuate transition region (18c), preferably having a radius in the range of 1 to 3 mm, in particular of 1.6 mm, from the radially further inner groove flank (18) to the rearmost point (P2) of the collar portion (24) which is radially further inwards from the material recess (14).

15. Wheel (7) according to any of claims 9 to 14, **characterised in that** the rear flange region (11) is formed so as to have a cylindrical inner surface (19) which faces away from the collar (12) as a straight extension of a cylindrical inner surface (20) of the rim base (10).

## Revendications

1. Procédé de fabrication d'une roue (7), en particulier d'une roue de véhicule, avec un corps de jante (8), auquel se raccorde une zone de rebord avant (9), qui est reliée à une zone de rebord arrière (11) opposée par le biais d'une base de jante (10), qui présente un collet (12) périphérique, épaissi par rapport à la base de jante (10), dans lequel une préforme (5) est formée par coulée, laquelle est façonnée en la roue finie (7), **caractérisé en ce que** pour la fabrication de la roue (7) avec un évidement de matériau (14) périphérique, s'étendant dans le collet (12) en forme de gorge, le long d'une surface frontale arrière (13) du collet (12) et présentant une profondeur de gorge (T3) définie, fermé en soi, l'évidement de matériau (14) est fabriqué lors de la coulée de la préforme (5) d'abord avec une première profondeur (T1), et ensuite est façonné jusqu'à la réalisation d'une deuxième profondeur (T2), laquelle est supérieure à la première profondeur (T1), dans lequel la profondeur (T1, T2) est déterminée respectivement à partir d'un plan de référence (F), lequel est agencé en s'étendant sensiblement perpendiculairement à un axe de rotation de la roue (7) et par un sommet arrière (Z) d'une section (E) agencée dans le prolongement de la base de jante (10) de la surface frontale arrière (13) de la préforme (5) coulée, non façonnée.

2. Procédé selon la revendication 1, **caractérisé en ce que** la première profondeur (T1) est dans la plage de 50 % à 80 %, de préférence 60 % à 70 %, en particulier 66 % de la deuxième profondeur (T2).

3. Procédé selon la revendication 1 ou 2, **caractérisé en ce que** la préforme (5), pour le façonnage, est compressée, de préférence forgée, ou tournée dans la zone correspondant à l'évidement de matériau (14) jusqu'à la deuxième profondeur (T2).

4. Procédé selon l'une quelconque des revendications 1 à 3, **caractérisé en ce que** la surface frontale arrière (13) présentant l'évidement de matériau (14) et le point de référence (Z) du collet (12) de la préforme (5) est façonnée, de préférence compressée, en particulier forgée, ou tournée, jusqu'à la réalisation de l'évidement de matériau (14) avec la profondeur de gorge (T3).

5. Procédé selon l'une quelconque des revendications 1 à 4, **caractérisé en ce que** la préforme (5) est coulée dans la zone correspondant à l'évidement de matériau (14) dans une vue dans la direction axiale (A) de la préforme (5) avec un fond de gorge (16) en forme d'anneau de cercle, de préférence plan, auquel se raccorde un flanc de gorge situé radialement plus à l'extérieur (17), au moins partiellement plan et un flanc de gorge situé radialement plus à l'intérieur (18), au moins partiellement plan.

6. Procédé selon l'une quelconque des revendications 1 à 5, **caractérisé en ce que** la zone de rebord arrière (11) est coulée avec une surface intérieure cylindrique (19) opposée au collet (12) dans le prolongement rectiligne d'une surface intérieure cylindrique (20) de la base de jante (10).

7. Moule (1) de fabrication d'une roue (7), en particulier d'une roue de véhicule, avec un procédé selon l'une quelconque des revendications 1 à 6, avec une partie supérieure (2), une partie inférieure (3) et au moins deux parties latérales (4), entre lesquelles une cavité (6) correspondant au moule négatif de la préforme (5) coulée est réalisée, dans lequel la partie supérieure (2) ou la partie inférieure (3) présente un bossage de matériau (15) correspondant au moule négatif de l'évidement de matériau (14) à fabriquer par coulée dans le collet (12).

8. Moule (1) selon la revendication 7, **caractérisé en ce qu'**au moins un élément d'éjection (21), pour l'application contre la surface (22) correspondant à l'évidement de matériau (14) du collet (12) et pour l'éjection de la roue coulée (7), est agencé dans le bossage de matériau (15).

9. Roue (7), en particulier roue de véhicule, avec un corps de jante (8), auquel se raccorde une zone de rebord avant (9), qui est reliée à une zone de rebord arrière (11) opposée par le biais d'une base de jante (10), qui présente un collet (12) périphérique, épaissi par rapport à la base de jante (10), **caractérisée en ce qu'**un évidement de matériau (14) périphérique, s'étendant en forme de gorge le long d'une surface frontale arrière (13) du collet (12), fermé en soi est réalisé dans le collet (12), lequel évidement de matériau (14) présente dans une vue dans la direction axiale (A) de la roue (7), un fond de gorge (16) en forme d'anneau de cercle, de préférence plan, auquel se raccorde un flanc de gorge situé radialement plus à l'extérieur (17), au moins partiellement plan et un flanc de gorge situé radialement plus à l'intérieur (18), au moins partiellement plan, dans laquelle de préférence l'évidement de matériau (14) présente une profondeur de gorge (T3) dans la plage de 4 à 9 mm, en particulier de 5,9 mm, par rapport au point le plus à l'arrière (P1) dans la direction axiale (A) de la roue (7) du collet (12), pour une épaisseur (D3) restant au moins par section du collet (12), dans la direction axiale (A) avant l'évidement de matériau (14), dans la plage de 5,5 à 9,5 mm, en particulier de 7,5 mm et/ou de préférence le fond de gorge (16) en forme d'anneau de cercle présente, entre des lignes de coupe imaginaires (P4, P5) avec les deux flancs de gorge (17, 18), une extension (X) dans la direction radiale (R) dans la plage de 10,5 à 14,5 mm, en particulier de 12,5 mm, pour une hauteur au moins par section (HB) du collet (12), dans la direction radiale (R), dans la plage de 23 à 27 mm, en particulier de 24,9 mm.

10. Roue (7) selon la revendication 9, **caractérisée en ce que** le flanc de gorge situé radialement plus à l'extérieur (17) présente un premier angle obtus (β), de préférence dans la plage de 95° à 120°, en particulier de 108°, et le flanc de gorge situé radialement plus à l'intérieur (18) présente un deuxième angle obtus (γ), de préférence dans la plage 105° à 145°, en particulier de 125°, par rapport au fond de gorge (16).

11. Roue (7) selon l'une quelconque des revendications 9 et 10, **caractérisée en ce que** l'évidement de matériau (14) présente, dans une vue en coupe, une zone de transition en forme d'arc de cercle (17a) entre le fond de gorge (16) et le flanc de gorge situé radialement plus à l'extérieur (17) et une zone de transition en forme d'arc de cercle (18a) entre le fond de gorge (16) et le flanc de gorge situé radialement plus à l'intérieur (18), de préférence avec un rayon de l'arc de cercle dans la plage de 1 à 4 mm, en particulier de 2 mm.

12. Roue (7) selon l'une quelconque des revendications 9 à 11, **caractérisée en ce que** le point le plus à l'arrière (P2) de la section de collet située radialement plus à l'intérieur (24) de l'évidement de matériau (14), se trouve plus devant par rapport au point le plus à l'arrière (P1) de la section de collet située radialement plus à l'extérieur (23) de l'évidement de matériau (14), de préférence d'une distance (D4) dans la plage de 0,8 à 1,8 mm, en particulier de 1,3 mm, dans la direction axiale (A) du collet (12).

13. Roue (7) selon l'une quelconque des revendications 9 à 12, **caractérisée en ce que** le collet (12) est réalisé, dans une vue en coupe, avec une première zone de transition en forme d'arc de cercle (17c), de préférence avec un rayon dans la plage de 1 à 4 mm, en particulier de 2 mm, du flanc de gorge situé radialement plus à l'extérieur (17) par rapport au point le plus à l'arrière (P1) de la section de collet située radialement plus à l'extérieur (23) de l'évidement de matériau (14).

14. Roue (7) selon l'une quelconque des revendications 9 à 13, **caractérisée en ce que** le collet (12) est réalisé, dans une vue en coupe, avec une deuxième zone de transition en forme d'arc de cercle (18c), de préférence avec un rayon dans la plage de 1 à 3 mm, en particulier de 1,6 mm, du flanc de gorge situé radialement plus à l'intérieur (18) par rapport au point le plus à l'arrière (P2) de la section de collet située radialement plus à l'intérieur (24) de l'évidement de matériau (14).

15. Roue (7) selon l'une quelconque des revendications 9 à 14, **caractérisée en ce que** la zone de rebord arrière (11) est réalisée avec une surface intérieure cylindrique (19) opposée au collet (12) dans le prolongement rectiligne d'une surface intérieure cylindrique (20) de la base de jante (10).
